Europäisches Patentamt

European Patent Office

Office européen des brevets

(11) Publication number: **0 360 432 B1**

# EUROPEAN PATENT SPECIFICATION

(45) Date of publication of patent specification: **27.07.94**  (51) Int. Cl.<sup>5</sup>: **G06F 15/66**

(21) Application number: **89308677.7**

(22) Date of filing: **25.08.89**

(54) **Video graphics system.**

(30) Priority: **05.09.88 GB 8820862**

(43) Date of publication of application:
**28.03.90 Bulletin 90/13**

(45) Publication of the grant of the patent:
**27.07.94 Bulletin 94/30**

(84) Designated Contracting States:
**AT BE DE FR GB**

(56) References cited:
**EP-A- 0 184 547
GB-A- 2 165 728
US-A- 4 546 349**

**COMPUTER TECHNOLOGY REVIEW, vol. 6, no. 3, summer 1986, pages 41-45, LosAngeles, CA, US; P. HAMPTON et al.: "Multiprocessor APs simplify calculationsfor image processing"**

**BRITISH KINEMATOGRAPHY SOUND AND TELEVISION JOURNAL, vol. 66, no. 8, August 1984, pages 332-335, London, GB; F.SIM: "The Ouantel paint box - the ultimate TV graphics system"**

(73) Proprietor: **OUANTEL LIMITED
Pear Tree Lane
Newbury Berkshire RG13 2LT(GB)**

(72) Inventor: **Long, Robert James Spring Cottage
Church Road
Blewbury
Didcot Oxon OX11 9PY(GB)**
Inventor: **Mayer, Michael Terry
45, Mayfair Drive
Newbury Berkshire RG14 6EE(GB)**
Inventor: **O'Neill, John Stafford
4, Filbert Drive
Tilehurst
Reading Berkshire RG3 5DZ(GB)**

(74) Representative: **Milhench, Howard Leslie et al
R.G.C. Jenkins & Co.
26 Caxton Street
London SW1H 0RJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

The present invention relates to an electronic graphics apparatus and to a method of processing data representing a picture. In particular but not exclusively the invention relates to a method and apparatus for processing data representing a picture to produce data representing a modified picture containing one or more manipulated picture portions.

### BACKGROUND OF THE INVENTION

An example of an electronic graphics apparatus or system is described in British Patent No. 2,089,625 and corresponding United States Patent No. 4,514,818 assigned to the present assignee. This system includes a touch tablet and stylus combination for generating position signals designating the position of the stylus relative to the touch tablet. The user paints or draws (hereinafter referred to as "painting") by selecting a desired color and implement from a range of predefined colors and implements and manipulating the stylus on the touch tablet. This manipulation causes the touch tablet to generate a series of position signals which define the path or positioning of the stylus. An image is held in a store and when a position signal is produced a new patch of pixels are derived by a processing circuit for every picture point of the image covered by the selected implement. The image data in the store is read repeatedly and is applied to a TV-type color monitor so that the build up of the picture can be observed. Graphics systems of this type are manufactured by the present assignee and sold under the trade marks "PAINTBOX" and "GRAPHIC PAINTBOX" and described in British Kinematography Sound and Television Journal, vol. 66, no. 8, August 1984, pages 332-335, London, GB; F.SIM: "The Quantel paint box - the ultimate TV graphics system". This document also mentions the selection, magnification and editing of a section of an image.

In addition to painting and picture composition as described in the aforesaid patents, systems of this type can also provide for automatic processing of stored images to produce special effects. Some of these effects may be applied to the whole picture, such as a color wash or tint, but others are used much more selectively. Thus parts of an image may be required to be blurred or the reverse process (that is to say a sharpening or crisping of the image) may instead be required and such effects may be achieved by any suitable known blur or crisp algorithm. One known procedure for generating such effects involves an automatic manipulation of data for the whole image, usually involving spatial filtering algorithms or adjustment of color parameters, and results in a manipulated version of the whole of the original image being produced. The final processed data is obtained by processing the manipulated data selectively in combination with the original data by painting selected portions of the manipulated image into the original image, and thus manipulated data is only incorporated into the final image in selected regions. The painting of selected portions can be achieved by deriving pixels by combining the original image pixels with manipulated image pixels and writing the resulting modified pixels back into the framestore as described in British Patent No. 2,113,950 and US Patent No. 4,602,286 assigned to the present assignee. In this system first and second images are stored in respective first and second storing means and are combined on a picture point by picture point basis by a interpolator under the control of control image data stored in a third storing means. The control image can be created by the operator when the system is in a painting mode as described in the abovementioned British Patent No. 2,089,625 and corresponding US Patent No. 4,514, 818. The control image can be used as a mask or stencil to blank off areas in the first, i.e the original, image to prevent the creation of effects in those blanked off areas of the image. Image data in the blanked off areas of the first image can be prevented from being combined with corresponding image data in the second, i.e modified, image and in this way areas in the first image in which effects are not required can be defined.

The original graphics system of this type operated with a definition suitable for standard (NTSC or PAL) television broadcasting. The abovementioned "GRAPHIC PAINTBOX" is a second generation machine arranged to operate at higher definitions than that of the original system, but recently there has been a demand for machines capable of operating at even higher definitions.

The definition of a picture is increased by increasing the number of picture elements used in defining the picture and increasing the definition of a picture also increases the time taken to copy and manipulate these elements. Thus a machine capable of operating at higher definitions would be correspondingly slower in use than a machine operating at say broadcast definition to such a degree to be irritating to the operator.

### OBJECTS AND SUMMARY OF THE INVENTION

The present invention aims to mitigate the abovementioned problem and to provide an improved video graphics system in which the number of pixels to be manipulated and transformed in order to achieve desired effects is reduced compared with the prior art system. More particularly the present invention aims to increase the speed at which video graphics systems, and in particular high definition systems, can respond to effects requiring the copying and manipulation of image data.

According to one aspect of the present invention there is provided an electronic graphic apparatus for processing data defining a multiplicity of picture points forming an initial picture to produce data defining a multiplicity of picture points forming a modified picture containing a manipulated portion of the initial picture, the apparatus comprising:

a first data store for storing data defining multiple picture points which together represent the initial picture;

a display device for displaying a picture derived from the picture point data in the first store;

user operable input means for defining an area of interest in the picture displayed by the display device;

a processor for reading picture point data from said first data store corresponding to the whole of the defined area of interest, for manipulating all of the read picture point data representing said area of interest to produce data defining a manipulated form of said area of interest; and

a second data store for storing the data defining said manipulated form of said area of interest, the processor furthermore being responsive to said user operable input means to select picture point data from said second data store, to combine the selected data with corresponding unmanipulated data from said first data store to produce combined data, and to write said combined data to said first data store to replace the corresponding unmanipulated data previously stored therein, the data in the first store thus representing said modified picture containing a manipulated portion of the initial picture.

According to another aspect of the invention there is provided a method of processing data representing a multiplicity of picture points forming an initial picture of higher resolution than broadcast television to produce data representing a multiplicity of picture points forming a modified picture containing a manipulated picture portion of the initial picture, the method comprising:

storing data defining multiple picture points which together represent the initial picture in a first store;

displaying on a display device a picture derived from the picture point data in the first store;

defining in response to user input an area of interest in the displayed picture;

reading picture point data from the first store corresponding to the whole of the defined area of interest;

manipulating all of the read picture point data representing picture points of said area of interest to produce data defining a manipulated form of said area of interest;

storing the data defining said manipulated form of said area of interest in a second store;

selecting in response to user input picture point data from said second store;

combining the selected data with corresponding unmanipulated data from said first store to produce combined data; and

storing said combined data in said first data store in place of the corresponding unmanipulated data previously stored therein, the data in the first store thus representing said modified picture containing a manipulated portion of the initial picture.

An advantage of the present invention is that the time taken to produce effects requiring automatic manipulation is significantly reduced. This is particularly advantageous when processing high definition images having a matrix of several thousand pixels in both directions.

By arranging for an area of interest to be definable by the user and by arranging the system such that image data associated with the area of interest only is transferred to the second store the amount of data requiring transfer and automatic manipulation, i.e. bulk processing, can be significantly reduced and this will result in a corresponding reduction in the data manipulation time. Furthermore, by arranging for subsequent painting of the modified data only within the area of interest, the possibility of the user inadvertently straying outside the area is eliminated.

A problem with manipulating high definition pictures, having many thousand pixels in each direction, is that manipulation of the image data in the second store is very time consuming and creates a delay which can be irritating to operators. The system embodying the invention, as will be described hereinbelow, therefore includes means by which an area of interest is defined within the displayed image in response to operator instructions. The corresponding area of original data is then copied from the first store to the second store, so that manipulation takes place only within this defined area. Thus by use of this feature the operator can reduce the time taken to manipulate data by selecting a smaller area of interest and then manipulating the data from only that area by way of the processor and this allows for subsequent selective combining of original image data from the first store and manipulated image data from the second store only within the defined area.

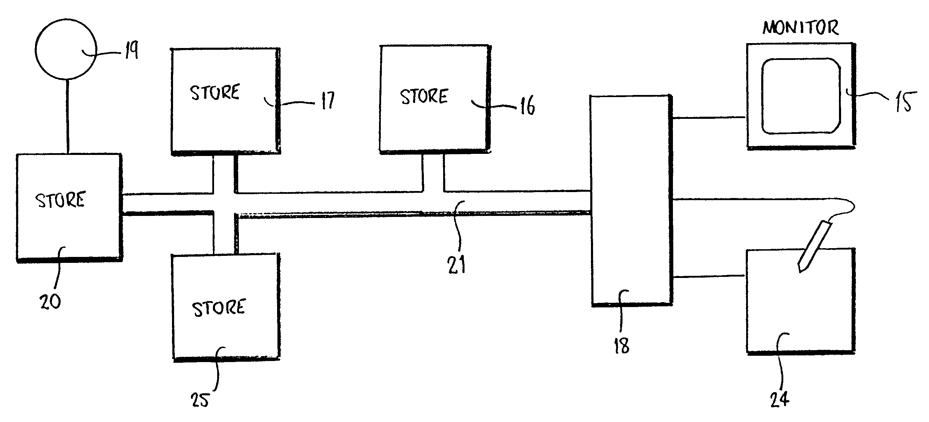

Further features of the invention are set forth with particularity in the appended claims and, together with the features abovementioned, will become clear from consideration of the following description of an exemplary embodiment given with reference to the accompanying drawing.

## BRIEF DESCRIPTION OF THE DRAWINGS

The single accompanying Figure shows an embodiment of a video graphics system according to the present invention.

## DESCRIPTION OF THE EMBODIMENT

A video graphics system is shown in the Figure in which an image is displayed on a video monitor 15 by continuously reading image data from a display refresh store 16. The data in store 16 is derived from a first image data store 17 and data in said first store 17 is processed in response to commands from a processor 18. Image data for a plurality of images are stored on a magnetic disc 19 and supplied to the first image store 17 via a disc buffer store 20. Data transfers between stores 16, 17, 19 and 20 occur over a data bus 21 under the control of the processor 18. A link 22 from the display refresh store 16 to the monitor 15, via processor 18, maintains a steady image on the monitor 15.

An operator interface is provided in the form of a pressure sensitive stylus 23 and a touch tablet 24. In a painting mode data is read from the first image store 17, modified in response to a color selected by the operator and to stylus pressure and then rewritten back to the store 17. Thus in response to operator commands, similar to the actions of a conventional artist using a drafting implement, an artistic image may be created.

In addition to painting, chalking and airbrushing etc, special effects are available which are implemented by automatically processing the image data. To this end a second image store 25 is also provided and is arranged to receive a copy of the original image data from the first store 17. It will of course be appreciated that the first and second stores may simply be different parts of the same store.

In previous systems the processor 18 has been arranged to manipulate the transferred data in store 25 to produce manipulated data by performing operations on the original image data to, for example, crisp or blur the image. The manipulated data in store 25 can subsequently be combined with original data in store 17 in response to operations of the stylus 23 to produce processed data representing a modified image which is written back to the first framestore 17. In this way store 25 would include a copy of all the data in store 17 which has been manipulated so as for example to crisp or blur the whole image. Once the data in store 25 had been manipulated the operator could then operate the stylus, in a similar way to painting, so that selected portions of the data of the original image, i.e. those parts of the image painted over by the user, were combined with the manipulated image data.

Modified data P is derived by combining original data B in store 17 with manipulated data A in store 25 on a pixel-by-pixel basis. The factor k controlling the combination is derived from stylus pressure and notional brush shape or distribution, as described in the abovementioned British Patent No. 2,113,950 and corresponding US Patent No. 4,602,286 assigned to the present assignee. Each pixel of the processed data written to the first store 17 is calculated thus:

$$P = kA + (1-k) B;$$

where:
P = modified data;
k = combination controlling factor;
A = manipulated data; and
B = original data.

A distinguishing feature of the system shown in the accompanying drawing as compared to prior art systems is that a selected area of interest of the image may be defined by magnifying and shifting the image by selecting appropriate commands from a menu of commands on the display screen so that the selected image area fills the screen of the display monitor 15 and that a command can then be selected from the menu to "lock" the capabilities of the processor 18 to a magnified area so selected.

When the magnify and shift commands are selected by the user, magnification and shift operations are executed only on the image data portion or area to be displayed as that area is transferred from the first store 17 to the display store 16. Once the desired area is being displayed on the monitor, selection of the lock command causes the processor 18 to retain the parameters associated with the shifting and magnifying of the displayed image. These parameters are used subsequently on transferring the thus selected area of pixel data defining the original image from store 17 to store 25. In addition to the pixel data relating to the defined area of interest, additional pixels defining a guard zone around the boundary of the area may also be transferred to the second store 25 for manipulation in order to facilitate the image modification process by allowing paint brush distributions to be fully defined over the boundary of the area of interest so that modifications can be made to area of interest boundary pixels in the original image when the user paints at the boundary of the area of interest.

The locked area of image data including the guard zone may be manipulated by user selectable functions which for example may apply a color wash or tint to the image area or cause the area to be made sharper or more blurred. Once the selected function has been executed on the image area data in the second store 25, the operator can use the stylus to paint selected portions of the modified image area in the second store 25 onto corresponding portions of the original image in the first store 17. That is to say, the "paint" of the drawing implement is the image data in the second store 25. This painting is done under the control of the operator using the stylus 23 on the touch tablet 24 on a pixel by pixel basis in accordance with the abovementioned combination function $P = kA + (1-k)B$. Thus, pixels from both stores 17,25 can be blended with individual pixels being addressed several times up to the point where saturation is reached, i.e for a given pixel in store 17 the modified image data from store 25 has completely replaced the original data in store 17, as is known for example from the above identified patents. This blending is limited by the shift and magnify parameters retained in the processor 18 to the area of interest in the image. If the operator tries to paint outside this area there will be no effect on the original image.

With a relatively small locked area being defined the time taken for data transfer and manipulation is significantly reduced and this significantly increases the overall operating speed. Selection of manipulated data for processing in store 25 and subsequent painting back to store 17 is restricted to the locked area and the operator must therefore carefully select this area before initiating the operation. However, since operations such as crisping or blurring are often performed only on small magnified areas of the image the process of locking a selected area is well suited to being used as part of the magnifying process.

**Claims**

1. An electronic graphic apparatus for processing data defining a multiplicity of picture points forming an initial picture to produce data defining a multiplicity of picture points forming a modified picture containing a manipulated portion of the initial picture, the apparatus comprising:
   a first data store (17) for storing data defining multiple picture points which together represent the initial picture;
   a display device (15) for displaying a picture derived from the picture point data in the first store;
   user operable input means (24) for defining an area of interest in the picture displayed by the display device;
   a processor (18) for reading picture point data from said first data store corresponding to the whole of the defined area of interest, for manipulating all of the read picture point data representing of said area of interest to produce data defining a manipulated form of said area of interest; and
   a second data store (25) for storing the data defining said manipulated form of said area of interest, the processor furthermore being responsive to said user operable input means to select picture point data from said second data store, to combine the selected data with corresponding unmanipulated data from said first data store to produce combined data, and to write said combined data to said first data store to replace the corresponding unmanipulated data previously stored therein, the data in the first store thus representing said modified picture containing a manipulated portion of the initial picture.

2. An apparatus according to claim 1, wherein the user operable means (24) is operable to enable the user to cause the display device to display a selected portion of the picture represented by the picture point data in the first store and to enable the user to issue a lock command such that the displayed picture portion is defined as the area of interest.

3. A video graphics system according to claim 2, wherein the user operable means is operable to enable the user to cause shifting and magnifying of the picture as displayed by the display device in order to facilitate selection of the portion of the picture for display, the issuing of a lock command causing parameters associated with shifting and magnifying to be retained as parameters operable exclusively for the area of interest.

4. A video graphics system according to any preceding claim, wherein the area of interest has an associated guard zone which bounds the area of the interest and the processor (18) is adapted to manipulate data representing picture points in the guard zone and to write guard zone data including said manipulated guard zone data to said second data store (25).

5. An apparatus according to any preceding claim, wherein said user operable means (24) includes a stylus and touch tablet device.

6. An apparatus according to claim 5, wherein said selected manipulated data from the second store (25) and said respective data from said first store (17) are combined in accordance with data defining a notional brush distribution and data defining pressure applied by the stylus to the touch tablet.

7. An apparatus according to any preceding claim, wherein the processor is adapted to write data to the second store before manipulating said data representing picture points of said area of interest.

8. A method of processing data representing a multiplicity of picture points forming an initial picture to produce data representing a multiplicity of picture points forming a modified picture containing a manipulated picture portion of the initial picture, the method comprising:

    storing data defining multiple picture points which together represent the initial picture in a first store;

    displaying on a display device a picture derived from the picture point data in the first store;

    defining in response to user input an area of interest in the displayed picture;

    reading picture point data from the first store corresponding to the whole of the defined area of interest;

    manipulating all of the read picture point data representing picture points of said area of interest to produce data defining a manipulated form of said area of interest;

    storing the data defining said manipulated form of said area of interest in a second store;

    selecting in response to user input picture point data from said second store;

    combining the selected data with corresponding unmanipulated data from said first store to produce combined data; and

    storing said combined data in said first data store in place of the corresponding unmanipulated data previously stored therein, the data in the first store thus representing said modified picture containing a manipulated portion of the initial picture.

9. A method according to claim 8, further comprising displaying a selected portion of the initial picture represented by the picture point data in the first store, said portion being the area of interest of the initial picture.

10. A method according to claim 9, wherein the portion is selected by shifting and magnifying the picture as displayed, and parameters associated with the shifting and magnifying are retained as parameters operable exclusively on the area of interest.

11. A method according to any of claims 8 to 10, wherein the area of interest has an associated guard zone which bands the area of interest, and data for picture points in the guard zone also being manipulated and stored in the second store.

12. A method according to any of claims 8 to 11, wherein said data representing picture points of said area of interest is stored in said second store before said manipulation.

**Patentansprüche**

1. Elektronisches graphisches System zur Verarbeitung von Daten, die eine Vielzahl von ein Anfangsbild bildenden Bildpunkten definieren, zur Erzeugung von Daten, die eine Vielzahl von Bildpunkten definieren, die ein einen manipulierten Teil des Anfangsbildes enthaltendes modifiziertes Bild definieren, umfassend:
einen ersten Datenspeicher (17) zur Speicherung von Daten, die mehrfache zusammen das Anfangsbild repräsentierende Bildpunkte definieren;
eine Anzeigeanordnung (15) zur Anzeige eines von den Bildpunktdaten im ersten Speicher abgeleiteten Bildes;
benutzerbedienbare Eingabemittel (24) zur Definition eines interessierenden Bereiches in dem durch die Anzeigeanordnung angezeigten Bild;
einen Prozessor (18) zur Auslesung von der Gesamtheit des definierten interessierenden Bereichs entsprechenden Bildpunktdaten aus dem ersten Datenspeicher zwecks Manipulierung aller den interessierenden Bereich repräsentierenden ausgelesenen Bildpunktdaten, um eine manipulierte Form des interessierenden Bereichs definierende Daten zu erzeugen; und
einen zweiten Datenspeicher (25) zur Speicherung von die manipulierte Form des interessierenden Bereichs definierenden Daten, wobei der Prozessor auf die benutzerbetätigbaren Eingabemittel anspricht, um Bildpunktdaten aus dem zweiten Datenspeicher auszuwählen, die ausgewählten Daten mit den entsprechenden unmanipulierten Daten aus dem ersten Speicher zur Erzeugung kombinierter Daten zu kombinieren und die kombinierten Daten zum Ersatz der vorher im ersten Datenspeicher gespeicherten entsprechenden unmanipulierten Daten in diesem ersten Speicher zu ersetzen, so daß die Daten im ersten Datenspeicher das einen manipulierten Teil des Anfangsbildes enthaltende modifizierte Bild repräsentieren.

2. System nach Anspruch 1, in dem die benutzerbetätigbaren Mittel (24) betätigbar sind, um den Benutzer in die Lage zu versetzen, die Anzeigeanordnung zur Anzeige eines ausgewählten Teiles des durch die Bildpunktdaten im ersten Speicher repräsentierten Bildes zu veranlassen und den Benutzer in die Lage zu versetzen, einen Klemmbefehl derart auszulösen, daß der angezeigte Bildteil als interessierender Bereich definiert ist.

3. Videographiksystem nach Anspruch 2, in dem die benutzerbetätigbaren Mittel betätigbar sind, um den Benutzer in die Lage zu versetzen, eine Verschiebung und Vergrößerung des durch die Anzeigeanordnung angezeigten Bildes zu bewirken, um die Auswahl des Bildteils für die Anzeige zu erleichtern, wobei die Ausgabe eines Klemmbefehls bewirkt, daß der Verschiebung und Vergrößerung zugeordnete Parameter als ausschließlich für den interessierenden Bereich wirksame Parameter gehalten werden.

4. Videographiksystem nach den vorhergehenden Ansprüchen, in dem der interessierende Bereich eine ihn begrenzende Schutzzone aufweist und der Prozessor (18) dazu dient, Bildpunkte in der Schutzzone repräsentierende Daten zu manipulieren und Schutzzonendaten einschließlich der manipulierten Schutzzonendaten in den zweiten Datenspeicher (25) zu schreiben.

5. System nach den vorhergehenden Ansprüchen, in dem die benutzerbedienbaren Mittel (24) eine Einrichtung aus Zeichenstift und Zeichenplatte enthalten.

6. System nach Anspruch 5, in dem die ausgewählten manipulierten Daten aus dem zweiten Speicher (25) und die jeweiligen Daten aus dem ersten Speicher (17) in Abhängigkeit von eine beabsichtigte Pinselverteilung definierenden Daten und von Daten, die einen vom Zeichenstift auf die Zeichenplatte ausgeübten Druck definieren, kombiniert werden.

7. System nach den vorhergehenden Ansprüchen, in dem der Prozessor zum Schreiben von Daten in den zweiten Speicher vor Manipulierung der Bildpunkte des interessierenden Bereichs repräsentierdenden Daten ausgebildet ist.

8. Verfahren zur Verarbeitung von Daten, die eine Vielzahl von ein Anfangsbild bildenden Bildpunkten repräsentieren, um Daten zu erzeugen, die eine Vielzahl von Bildpunkten repräsentieren, die ein einen manipulierten Bildteil des Anfangsbildes enthaltendes modifiziertes Bild repräsentieren, umfassend:
Speicherung von Daten, die mehrfache zusammen das Anfangsbild repräsentierende Bildpunkte definieren, in einem ersten Speicher;
Anzeige eines aus den Bildpunktdaten im ersten Speicher abgeleiteten Bildes auf einer Anzeigeanordnung;
Definition eines interessierenden Bereiches im angezeigten Bild in Abhängigkeit von einer Benutzereingabe;
Auslesen von der Gesamtheit des definierten interessierenden Bereichs entsprechenden Bildpunktdaten aus dem ersten Speicher;
Manipulation aller Bildpunkte des interessierenden Bereichs repräsentierenden ausgelesenen Bildpunktdaten zur Erzeugung von eine manipulierte Form des interessierenden Bereichs definierenden Daten;
Speicherung der die manipulierte Form des interessierenden Bereichs definierenden Daten in einem zweiten Speicher;
Auswahl von Bildpunktdaten aus dem zweiten Speicher in Abhängigkeit von einer Benutzereingabe;
Kombination der ausgewählten Daten mit entsprechenden unmanipulierten Daten aus dem ersten Speicher zur Erzeugung kombinierter Daten; und
Speicherung der kombinierten Daten im ersten Datenspeicher an Stelle der vorher in diesem gespeicherten entsprechenden unmanipulierten Daten, so daß die Daten im ersten Speicher das einen manipulierten Teil des Anfangsbildes enthaltende modifizierte Bild repräsentieren.

9. Verfahren nach Anspruch 8, weiterhin umfassend die Anzeige eines ausgewählten Teils des Anfangsbildes, das durch die Bildpunktdaten im ersten Speicher repräsentiert ist, wobei dieser Teil der interessierende Bereich des Anfangsbildes ist.

10. Verfahren nach Anspruch 9, bei dem der Teil durch Verschiebung und Vergrößerung des angezeigten Bildes gewählt wird und der Verschiebung und der Vergrößerung zugeordnete Parameter als ausschließlich für den interessierenden Bereich wirksam gehalten werden.

11. Verfahren nach den Ansprüchen 8 bis 10, bei dem der interessierende Bereich eine ihn begrenzende Schutzzone aufweist und Daten für

7

Bildpunkte in der Schutzzone ebenfalls manipuliert und im zweiten Speicher gespeichert werden.

12. Verfahren nach den Ansprüchen 8 bis 11, bei dem Bildpunkte des interessierenden Bereichs repräsentierende Daten vor der Manipulation im zweiten Speicher gespeichert werden.

**Revendications**

1. Un appareil graphique électronique destiné à traiter des données définissant une multiplicité de points de représentation formant une représentation initiale afin de produire des données définissant une multiplicité de points de représentation formant une représentation modifiée contenant une partie manipulée de la représentation initiale, l'appareil comprenant:

une première mémoire (17) de données servant à mémoriser des données définissant de multiples points de représentation qui représentent ensemble la représentation initiale;

un dispositif d'affichage (15) pour afficher une représentation dérivée des données de points de représentation de la première mémoire;

un moyen d'entrée (24) actionnable pour l'utilisateur afin de définir une zone concernée dans la représentation affichée par le dispositif d'affichage;

un processeur (18) pour lire, dans ladite première mémoire de donnée, des données de points de représentation correspondant à la totalité de la zone concernée définie, pour manipuler la totalité des données lues de points de représentation représentant ladite zone concernée afin de produire des données définissant une forme manipulée de la ladite zone concernée; et

une deuxième mémoire (25) de données servant à mémoriser les données définissant ladite forme manipulée de ladite zone concernée, le processeur étant en outre sensible audit moyen d'entrée actionnable par l'utilisateur pour choisir, dans ladite deuxième mémoire de données, des données de points de représentation, pour combiner les données choisies avec des données correspondantes non manipulées venant de ladite première mémoire de données afin de produire des données combinées, et pour écrire dans ladite première mémoire de données lesdites données combinées afin de remplacer les données correspondantes non manipulées qui y étaient précédemment mémorisées, les données de la première mémoire représentant ainsi ladite représentation modifiée contenant une partie manipulée de la représentation initiale.

2. Un appareil selon la revendication 1, dans lequel le moyen (24) actionnable par l'utilisateur est actionnable de façon à permettre à l'utilisateur d'amener le dispositif d'affichage à afficher une partie choisie de la représentation représentée par les données de points de représentation de la première mémoire et à permettre à l'utilisateur d'émettre un ordre de verrouillage tel que la partie de représentation affichée soit définie comme la zone concernée.

3. Un système graphique vidéo selon la revendication 2, dans lequel le moyen actionnable par l'utilisateur est actionnable de façon à permettre à l'utilisateur de provoquer un décalage et un agrandissement de la représentation affichée par le dispositif d'affichage afin de faciliter un choix de la partie de la représentation à afficher, l'émission d'un ordre de verrouillage amenant des paramètres associés au décalage et à l'agrandissement à être retenus comme paramètres actionnables exclusivement pour la zone concernée.

4. Un système graphique vidéo selon une revendication précédente quelconque dans lequel une zone de garde qui limite la zone concernée est associée à la zone concernée et le processeur (18) est apte à manipuler des données représentant des points de représentation de la zone de garde et à écrire dans ladite deuxième mémoire (25) de données des données de zone de garde incluant lesdites données manipulées de zone de garde.

5. Un appareil selon une revendication précédente quelconque, dans lequel ledit moyen (24) actionnable par l'utilisateur inclut un stylet et un dispositif à tablette de contact.

6. Un appareil selon la revendication 5, dans lequel lesdites données manipulées choisies dans la deuxième mémoire (25) et lesdites données respectives venant de ladite première mémoire (17) sont combinées conformément à des données définissant une répartition notionnelle de brosse et des données définissant une pression appliquée par le stylet à la tablette de contact.

7. Un appareil selon une revendication précédente quelconque, dans lequel le processeur est apte à écrire des données dans la deuxième mémoire avant de manipuler lesdites données représentant des points de représentation de ladite zone concernée.

**8.** Un procédé de traitement de données représentant une multiplicité de points de représentation formant une représentation initiale afin de produire des données représentant une multiplicité de points de représentation formant une représentation modifiée contenant une partie de représentation manipulée de la représentation initiale, le procédé comprenant les étapes consistant à:

mémoriser, dans une première mémoire, les données définissant de multiples points de représentation qui représentent ensemble la représentation initiale;

afficher sur un dispositif d'affichage une représentation dérivée des données de points de représentation de la première mémoire;

définir, en réponse à une entrée d'utilisateur, une zone concernée de la représentation affichée;

lire dans la première mémoire des données de points de représentation correspondant à la totalité de la zone concernée définie;

manipuler la totalité des données lues de points de représentation représentant des points de représentation de ladite zone concernée afin de produire des données définissant une forme manipulée de ladite zone concernée;

mémoriser dans une deuxième mémoire les données définissant ladite forme manipulée de ladite zone concernée;

choisir dans ladite deuxième mémoire, en réponse à une entrée d'utilisateur, des données de points de représentation;

combiner les données choisies avec des données correspondantes non manipulées venant de la première mémoire afin de produire des données combinées: et

mémoriser dans ladite première mémoire de données lesdites données combinées au lieur des données correspondantes non manipulées qui y étaient précédemment mémorisées, les données de la première mémoire représentant ainsi ladite représentation modifiée contenant une partie manipulée de la représentation initiale

**9.** Un procédé selon la revendication 8, comprenant en outre un affichage d'une partie choisie de la représentation initiale représentée par les données de points de représentation de la première mémoire, ladite partie étant la zone concernée de la représentation initiale.

**10.** Un procédé selon la revendication 9, dans lequel la partie est choisie en décalant et en agrandissant la représentation telle qu'elle est affichée, et des paramètres associés au décalage et à l'agrandissement sont retenus comme paramètres actionnables exclusivement sur la zone concernée.

**11.** Un procédé selon l'une quelconque des revendications précédentes 8 à 10 dans lequel une zone de garde, qui entoure la zone concernée, est associé à la zone concernée et des données concernant des points de représentation de la zone de garde sont également manipulées et mémorisées dans la deuxième mémoire.

**12.** Un procédé selon l'une quelconque des revendications 8 à 11, dans lequel lesdites données représentant des points de représentation de ladite zone concernée sont mémorisées dans ladite deuxième mémoire avant ladite manipulation.